# EUROPÄISCHE PATENTSCHRIFT

(11) **EP 3 966 097 B1**
(45) Veröffentlichungstag und Bekanntmachung des Hinweises auf die Patenterteilung: **26.03.2025**
(21) Anmeldenummer: 20724054.0
(22) Anmeldetag: 04.05.2020
(51) Int. Cl.: B62K 19/30, B62M 6/90, B62K 19/40, B62H 5/00, B62J 11/13, B62J 43/13, B62J 43/28

(54) **ELEKTRISCHE ENERGIESPEICHEREINRICHTUNG FÜR EIN ELEKTRISCH ANTREIBBARES FAHRRAD**
ELECTRICAL ENERGY STORAGE DEVICE FOR AN ELECTRICALLY DRIVABLE BICYCLE
DISPOSITIF D'ACCUMULATION D'ÉNERGIE ÉLECTRIQUE POUR UN VÉLO À ENTRAÎNEMENT ÉLECTRIQUE

(30) Priorität: 07.05.2019 DE 102019111891
(43) Veröffentlichungstag der Anmeldung: 16.03.2022
(73) Patentinhaber: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB
(86) Internationale Anmeldenummer: PCT/EP2020/062251
(87) Internationale Veröffentlichungsnummer: WO 2020/225179

(56) Entgegenhaltungen:
- EP-A1- 3 266 693
- DE-A1- 102016 105 241
- DE-A1- 102018 211 695
- DE-U1- 202014 005 639
- US-A1- 2018 241 022

## Beschreibung

### Technisches Gebiet

Die Erfindung betrifft eine elektrische Energiespeichereinrichtung für ein elektrisch antreibbares Fahrrad. Die Erfindung betrifft zudem ein elektrisches Energiespeichersystem für ein elektrisch antreibbares Fahrrad. Die Erfindung betrifft auch eine Fahrradkomponente für ein elektrisch antreibbares Fahrrad. Die Erfindung betrifft außerdem ein elektrisch antreibbares Fahrrad.

### Stand der Technik

Im Stand der Technik sind Fahrräder bekannt, welche als ein E-Bike ausgebildet sind. Derartige Fahrräder können als eine Fahrradkomponente einen Akkumulator aufweisen, welcher Energie zum elektrischen Antreiben des Fahrrads bereitstellen kann. Das Dokument DE102018211695A1 offenbart eine gattungsgemäße elektrische Energiespeichereinrichtung.

### Darstellung der Erfindung

Die Erfindung bezieht sich in einem Aspekt auf eine elektrische Energiespeichereinrichtung für ein elektrisch antreibbares Fahrrad. Die elektrische Energiespeichereinrichtung kann einen Akkumulator und/oder einen Kondensator aufweisen. Bei der elektrischen Energiespeichereinrichtung kann es sich um einen Akkumulator handeln. Bei der elektrischen Energiespeichereinrichtung kann es sich um einen Kondensator handeln. Das elektrisch antreibbare Fahrrad kann mit einem Elektromotor angetrieben werden. Der Elektromotor kann auf dem elektrisch antreibbaren Fahrrad angeordnet sein. Die elektrische Energiespeichereinrichtung kann mit dem Elektromotor verbunden sein, um diesen mit elektrischer Energie zu versorgen.

Die elektrische Energiespeichereinrichtung weist energiespeicherseitige elektrische Kontakte auf. Die energiespeicherseitigen elektrischen Kontakte sind dazu eingerichtet, um mit fahrradseitigen elektrischen Kontakten lösbar elektrisch verbunden zu werden. Die energiespeicherseitigen elektrischen Kontakte können an der elektrischen Energiespeichereinrichtung angeordnet sein. Die fahrradseitigen elektrischen Kontakte können an dem elektrisch antreibbaren Fahrrad angeordnet sein. Die energiespeicherseitigen elektrischen Kontakte können mittig an mindestens einer Seite der elektrische Energiespeichereinrichtung angeordnet sein. Bei einem elektrischen Kontakt kann es sich auch um einen elektrischen Anschluss handeln.

Die elektrische Energiespeichereinheit kann einen männlichen elektrischen Stecker aufweisen. Die Fahrradkomponente kann einen entsprechenden weiblichen elektrischen Stecker aufweisen. Der männliche elektrische Stecker der elektrischen Energiespeichereinheit kann in den weiblichen elektrischen Stecker gesteckt werden. Der männliche elektrische Stecker und/oder der weibliche elektrische Stecker kann derart ausgebildet sein, dass ein elektrisches Stecken in verschiedenen Steckrichtungen beziehungsweise in verschiedenen Steckrichtungen innerhalb eines möglichen Steckbereichs durchgeführt werden kann.

Die elektrische Energiespeichereinrichtung weist eine energiespeicherseitige Verriegelungsanordnung zum Verriegeln der elektrischen Energiespeichereinrichtung an dem Fahrrad, insbesondere an einer Fahrradkomponente des Fahrrads, auf. Die energiespeicherseitige Verriegelung kann an der elektrischen Energiespeichereinrichtung angeordnet sein. Bei der Fahrradkomponente kann es sich um ein Rahmenrohr des Fahrrads handeln.

Die energiespeicherseitige Verriegelungsanordnung weist einen außermittigen Vorsprung auf. Der außermittige Vorsprung kann beabstandet zu einer Bauteilsachse der elektrischen Energiespeichereinrichtung an dieser angeordnet sein. Der außermittige Vorsprung kann beabstandet zu einer Symmetrieachse der Energiespeichereinrichtung an dieser angeordnet sein. Der außermittige Vorsprung kann eine Bauteilsauskragung der elektrischen Energiespeichereinrichtung aufweisen.

Erfindungsgemäß sind die energiespeicherseitigen elektrischen Kontakte an einem ersten Endbereich der elektrischen Energiespeichereinrichtung angeordnet. Der erste Endbereich kann eine erste Stirnseite der elektrischen Energiespeichereinrichtung aufweisen.

Die energiespeicherseitige Verriegelungsanordnung ist an einem zu dem ersten Endbereich gegenüberliegenden zweiten Endbereich der elektrischen Energiespeichereinrichtung angeordnet.

Der zweite Endbereich kann eine zweite Stirnseite aufweisen, welche zu der Stirnseite gegenüberliegend an der elektrischen Energiespeichereinrichtung angeordnet ist.

Die energiespeicherseitigen elektrischen Kontakte und die energiespeicherseitige Verriegelungsanordnung sind somit an gegenüberliegenden Endbereichen oder Stirnseiten der elektrischen Energiespeichereinrichtung angeordnet.

Der außermittige Vorsprung ist außermittig an dem zweiten Endbereich angeordnet.

Erfindungsgemäß weist die energiespeicherseitige Verriegelungsanordnung einen an dem zweiten Endbereich angeordneten Endbereichsvorsprung auf.

Die energiespeicherseitige Verriegelungsanordnung weist eine an dem zweiten Endbereich angeordnete Endbereichsausnehmung auf.

Der Endbereichsvorsprung kann zumindest bereichsweise der Endbereichsausnehmung geometrisch entsprechen. Die Endbereichsausnehmung kann eine Materialausnehmung der Energiespeichereinrichtung aufweisen, welche in ihrer Ausdehnung beziehungsweise Dimensionierung größer als ein Materialvorsprung der elektrischen Energiespeichereinrichtung sein kann, welcher den Endbereichsvorsprung bilden kann.

Erfindungsgemäß weist die Endbereichsausnehmung einen Ausnehmungsumriss auf, welcher gespiegelt an einer Längsebene durch die elektrische Energiespeichereinrichtung einen Vorsprungsumriss des Endbereichsvorsprungs umfasst. Der Vorsprungsumriss kann gespiegelt an der Längsebene durch die elektrische Energiespeichereinrichtung von dem Ausnehmungsumriss der Endbereichsausnehmung umfasst sein. Der

Ausnehmungsumriss der Endbereichsausnehmung kann eine größere Ausdehnung aufweisen als der Vorsprungsumriss des Endbereichsvorsprungs. Der Ausnehmungsumriss beziehungsweise der Vorsprungsumriss kann sich auf ein Schnittprofil der Endbereichsausnehmung beziehungsweise des Endbereichsvorsprungs beziehen. Der Ausnehmungsumriss beziehungsweise der Vorsprungsumriss kann sich auf eine dreidimensionale Umrissgeometrie der Endbereichsausnehmung beziehungsweise des Endbereichsvorsprungs beziehen.

Gemäß einer weiteren Ausführungsform der elektrischen Energiespeichereinrichtung sind die energiespeicherseitigen elektrischen Kontakte zum Herstellen eines elektrischen Kontakts mit den fahrradseitigen elektrischen Kontakten derart ausgebildet, dass sie mit den fahrradseitigen elektrischen Kontakten mit verschiedenen relativen Bewegungen der energiespeicherseitigen elektrischen Kontakte zu den fahrradseitigen elektrischen Kontakten lösbar elektrisch verbindbar sind. Die relativen Bewegungen können verschiedene relative Bewegungsrichtungen der energiespeicherseitigen elektrischen Kontakte zu den fahrradseitigen elektrischen Kontakten aufweisen. Bei den verschiedenen relativen Bewegungen kann es sich um entsprechende translatorische Bewegungen und/oder um entsprechende rotatorische Bewegungen handeln. Bei den verschiedenen relativen Bewegungsrichtungen kann es sich um entsprechende translatorische oder rotatorische Bewegungsrichtungen handeln.

Gemäß einer weiteren Ausführungsform der elektrischen Energiespeichereinrichtung weist diese ein Halteelement zum Halten der elektrischen Energiespeichereinrichtung an dem Fahrrad, insbesondere in der Fahrradkomponente, auf. Das Halteelement kann zusätzlich zum gezielten Anordnen der elektrischen Energiespeichereinrichtung an dem Fahrrad, insbesondere zum Zentrieren der elektrischen Energiespeichereinrichtung in der Fahrradkomponente fungieren. Bei dem Halteelement kann es sich um einen Zentrierhalter zum Zentrieren der elektrischen Energiespeichereinrichtung in der Fahrradkomponente handeln.

Gemäß einer weiteren Ausführungsform der elektrischen Energiespeichereinrichtung ist das Halteelement derart ausgebildet, um die elektrische Energiespeichereinrichtung schwenkbar an dem Fahrrad, insbesondere an der Fahrradkomponente zu halten. Die elektrische Energiespeichereinrichtung kann mit dem Halteelement in die Fahrradkomponente eingeschwenkt werden.

Die elektrische Energiespeichereinheit kann um einen Schwenkpunkt, welcher an dem Halteelement der elektrischen Energiespeichereinheit und/oder an dem Aufnahmeelement der Fahrradkomponente ausgebildet sein kann, in die Fahrradkomponente eingeschwenkt werden. Alternativ oder zusätzlich kann die elektrische Energiespeichereinheit entlang einem Gleitpunkt, welcher an dem Halteelement der elektrischen Energiespeichereinheit und/oder an dem Aufnahmeelement der Fahrradkomponente ausgebildet sein kann, in die Fahrradkomponente eingeschoben werden.

Gemäß einer weiteren Ausführungsform der elektrischen Energiespeichereinrichtung ist das Halteelement derart ausgebildet, um die elektrische Energiespeichereinrichtung mit dem Fahrrad, insbesondere mit der Fahrradkomponente, in Eingriff zu bringen. Das Halteelement kann als eine Komponente einer Raste ausgebildet sein, um die elektrische Energiespeichereinrichtung an dem Fahrrad beziehungsweise an der Fahrradkomponente einzurasten.

Die Erfindung betrifft in einem weiteren Aspekt ein elektrisches Energiespeichersystem für ein elektrisch antreibbares Fahrrad. Bei dem elektrischen Energiespeichersystem kann es sich um ein Akkumulatorsystem handeln. Alternativ oder zusätzlich kann es sich bei dem elektrischen Energiespeichersystem um ein Kondensatorsystem handeln.

Das elektrische Energiespeichersystem weist zwei elektrische Energiespeichereinrichtungen gemäß dem vorhergehenden Aspekt auf.

Gemäß einer Ausführungsform des elektrischen Energiespeichersystems greifen die Verriegelungsanordnungen der zwei elektrischen Energiespeichereinrichtungen in einem aneinander angeordneten Zustand zumindest bereichsweise ineinander. Bei dem aneinander angeordneten Zustand können die energiespeicherseitigen Verriegelungsanordnungen zumindest bereichsweise ineinandergreifen. Die beiden außermittigen Vorsprünge können sich dabei gegenüberliegen. In dem aneinander angeordneten Zustand können die Endbereichsvorsprünge der zwei elektrischen Energiespeichereinrichtungen in die Endbereichsausnehmungen der zwei elektrischen Energiespeichereinrichtungen zumindest bereichsweise eingreifen.

Die Erfindung bezieht sich in einem weiteren Aspekt auf eine Fahrradkomponente für ein elektrisch antreibbares Fahrrad. Bei der Fahrradkomponente kann es sich um ein Rahmenrohr eines Fahrradrahmens handeln. Die Fahrradkomponente ist zum Aufnehmen von zwei elektrischen Energiespeichereinrichtungen nach dem entsprechenden vorhergehenden Aspekt oder von einem elektrischen Energiespeichersystem nach dem vorhergehenden Aspekt ausgebildet. Die Fahrradkomponente kann auch zum Aufnehmen von einer einzigen elektrischen Energiespeichereinrichtungen ausgebildet sein. Bei der elektrischen Energiespeichereinrichtung kann es sich um eine elektrische Energiespeichereinrichtung handeln, welche die Hälfte eines Aufnahmeraums zum Aufnehmen von mindestens einer elektrischen Energiespeichereinrichtung der Fahrradkomponente besetzt. Bei der elektrischen Energiespeichereinrichtung kann es sich auch um eine elektrische Energiespeichereinrichtung handeln, welche mehr als die Hälfte eines Aufnahmeraums zum Aufnehmen von mindestens einer elektrischen Energiespeichereinrichtung der Fahrradkomponente besetzt. Bei der elektrischen Energiespeichereinrichtung kann sich daher um einen sogenannten 1/2-Längen Akkumulator oder um einen sogenannten 2/3-Längen-Akkumulator handeln.

Gemäß einer Ausführungsform der Fahrradkomponente sind in der Fahrradkomponente elektrische Kontakte angeordnet, welche dazu eingerichtet sind, um mit den jeweiligen energiespeicherseitigen elektrischen Kontakten der zwei in der Fahrradkomponente aufnehmbaren elektrischen Energiespeichereinrichtungen lösbar elektrisch verbunden zu werden.

Gemäß einer weiteren Ausführungsform der Fahrradkomponente ist an der Fahrradkomponente eine Verriegelungseinrichtung zum Verriegeln von den zwei in dem Rahmenrohr aufnehmbaren elektrischen Energiespeichereinrichtungen angeordnet. Die Verriegelungseinrichtung kann wahlweise eine der beiden in dem Rahmenrohr aufnehmbaren elektrischen Energiespeichereinrichtungen oder beide elektrischen Energiespeichereinrichtungen verriegeln.

Eine Verriegelung der zwei in dem Rahmenrohr aufnehmbaren elektrischen Energiespeichereinrichtungen kann jeweils an den zu den Endbereichen, an welchen elektrische Kontakte angeordnet sind, gegenüberliegenden Endbereichen der zwei in dem Rahmenrohr aufnehmbaren elektrischen Energiespeichereinrichtungen durchgeführt werden. Die zwei in dem Rahmenrohr aufnehmbaren elektrischen Energiespeichereinrichtungen können somit an Endbereichen verriegelt werden, welche keine elektrischen Kontakte aufweisen. Dieses Verriegelungskonzept ist vorteilhaft so auch eine einzelne elektrischen Energiespeichereinrichtung in der Fahrradkomponente elektrisch verbunden und verriegelt werden kann.

Bei der Verriegelungseinrichtung kann es sich um eine verschiebbare Zentralbefestigung zum wahlweisen Befestigen von einer elektrischen Energiespeichereinheit oder von zwei elektrischen Energiespeichereinheiten handeln.

Die Verriegelungseinrichtung kann ein Befestigungsmittel, beispielsweise eine Schraube aufweisen, mit welchem die elektrische Energiespeichereinheit an der Fahrradkomponente befestigt werden kann. Alternativ oder zusätzlich kann die Verriegelungseinrichtung einen Steckverbinder, beispielsweise ein Steckauge, aufweisen, welcher durch die Fahrradkomponente in die elektrische Energiespeichereinheit gesteckt werden kann.

Die Verriegelungseinrichtung kann einen Drehelement aufweisen, welches in einer Drehstellung beide in dem Rahmenrohr aufnehmbaren elektrischen Energiespeichereinrichtungen verriegeln kann und in weiteren Drehstellungen wahlweise nur eine in dem Rahmenrohr aufnehmbare elektrischen Energiespeichereinrichtung verriegeln kann. Dabei kann eine in einer oberen oder unteren Anordnung in der Fahrradkomponente aufgenommenen Energiespeichereinrichtung wahlweise verriegelt werden. Das Drehelement kann einen Drehknopf aufweisen.

Die Verriegelungseinrichtung kann wahlweise an verschiedenen Verriegelungspositionen an der Fahrradkomponente verwendet werden, um wahlweise eine oder zwei in der Fahrradkomponente aufgenommenen elektrische Energiespeichereinheiten zu verriegeln.

Gemäß einer weiteren Ausführungsform der Fahrradkomponente ist die Verriegelungseinrichtung derart ausgebildet, um mit den energiespeicherseitigen Verriegelungsanordnungen der zwei in dem Rahmenrohr aufnehmbaren elektrischen Energiespeichereinrichtungen zusammenzuwirken. Die Verriegelungseinrichtung kann wahlweise in mindestens eine Verriegelungsanordnung der zwei elektrischen Energiespeichereinrichtungen eingreifen.

Gemäß einer weiteren Ausführungsform der Fahrradkomponente sind die in der Fahrradkomponente angeordneten elektrischen Kontakte an gegenüberliegenden Endbereichen der Fahrradkomponente insbesondere an einem tretlagernahen beziehungsweise tretlagerseitigen Endbereich eines Rahmenrohrs und an einem steuerrohrnahen beziehungsweise steuerrohrseitigen Endbereich des Rahmenrohrs angeordnet.

In dem aneinander angeordneten Zustand der zwei elektrischen Energiespeichereinrichtungen können die energiespeicherseitigen elektrischen Kontakte an zwei voneinander abgewandten Endbereichen der zwei elektrischen Energiespeichereinrichtungen angeordnet sein. Die energiespeicherseitigen elektrischen Kontakte sind daher in dem aneinander angeordneten Zustand nicht an zueinander zugewandten Endbereichen der zwei elektrischen Energiespeichereinrichtungen angeordnet.

Gemäß einer weiteren Ausführungsform der Fahrradkomponente weist diese eine Energiesteuerung auf, welche mit den in der Fahrradkomponente angeordneten elektrischen Kontakten verbunden ist, um Energie von einer oder von beiden der in der Fahrradkomponente aufgenommenen elektrischen Energiespeichereinrichtungen auf einem elektrisch antreibbaren Fahrrad selektiv bereitzustellen. Damit kann eine Entladereihenfolge von zwei in der Fahrradkomponente aufgenommenen elektrischen Energiespeichereinrichtungen gesteuert werden.

Gemäß einer weiteren Ausführungsform der Fahrradkomponente ist die Verriegelungseinrichtung verschiebbar an der Fahrradkomponente angeordnet, um mindestens eine der zwei an dem Rahmenrohr aufgenommenen elektrischen Energiespeichereinrichtungen in einem in die Fahrradkomponente geschobenen Zustand der Verriegelungseinrichtung zu verriegeln. Alternativ oder zusätzlich kann die Verriegelungseinrichtung drehbar an der Fahrradkomponente angeordnet sein, um mindestens eine der zwei in dem Rahmenrohr aufgenommenen elektrischen Energiespeichereinrichtung in einem Drehzustand der Verriegelungseinrichtung zu verriegeln.

Gemäß einer weiteren Ausführungsform der Fahrradkomponente weist diese einen Kabelraum zum Aufnehmen von mindestens einem Kabel oder Zug des Fahrrads auf. Die Verriegelungseinrichtung kann zumindest teilweise durch den Kabelraum durchragend angeordnet sein.

Gemäß einer weiteren Ausführungsform der Fahrradkomponente weist die Verriegelungseinrichtung eine drehbare Verriegelungseinrichtung zum drehenden Verriegeln von den zwei in der Fahrradkomponente aufgenommenen elektrischen Energiespeichereinrichtungen auf. Alternativ oder zusätzlich kann die Verriegelungseinrichtung eine steckbare Verriegelungseinrichtung zum steckenden Verriegeln von den zwei in der Fahrradkomponente aufgenommenen elektrischen Energiespeichereinrichtungen aufweisen.

Gemäß einer weiteren Ausführungsform der Fahrradkomponente weist diese zwei Aufnahmeelemente zum jeweiligen Aufnehmen von den zwei in der Fahrradkomponente aufnehmbaren elektrischen Energiespeichereinrichtungen auf. Die zwei Aufnahmeelemente können insbesondere zum jeweiligen Aufnehmen der zwei Halteelemente der zwei elektrischen Energiespeichereinrichtungen fungieren.

Die Erfindung bezieht sich in einem weiteren Aspekt auf ein elektrisch antreibbares Fahrrad, welches eine Fahrradkomponente nach dem vorhergehenden Aspekt aufweist.

Das elektrisch antreibbare Fahrrad kann mindestens eine weitere Fahrradkomponente aufweisen. Die mindestens eine weitere Fahrradkomponente kann beispielsweise einen elektrischen Motor, eine Energiesteuerung und einen Fahrradrahmen aufweisen.

### Kurze Beschreibung der Figuren

- Figur 1: zeigt eine Fahrradkomponente für ein elektrisch antreibbares Fahrrad gemäß einer Ausführungsform der Erfindung.
- Figur 2a: zeigt eine elektrische Energiespeichereinrichtung gemäß einer Ausführungsform der Erfindung in einer seitlichen Schnittansicht.
- Figur 2b: zeigt die elektrische Energiespeichereinrichtung von Figur 2a in einer Draufsicht.
- Figur 3a: zeigt die Fahrradkomponente von Figur 1 mit der elektrischen Energiespeichereinrichtung von Figuren 2a und 2b in einem unteren Aufnahmezustand der elektrischen Energiespeichereinrichtung in der Fahrradkomponente.
- Figur 3b: zeigt die Fahrradkomponente von Figur 1 mit der elektrischen Energiespeichereinrichtung von Figuren 2a und 2b in einem oberen Aufnahmezustand der elektrischen Energiespeichereinrichtung in der Fahrradkomponente.
- Figur 4: zeigt die Fahrradkomponente von Figur 1 mit zwei elektrischen Energiespeichereinrichtungen von Figuren 2a und 2b in einem oberen und unteren Aufnahmezustand der elektrischen Energiespeichereinrichtungen in der Fahrradkomponente.
- Figur 5: zeigt isoliert die zwei in der Fahrradkomponente aufgenommenen elektrischen Energiespeichereinrichtungen von Figur 4 in einer Draufsicht.

### Detaillierte Beschreibung von Ausführungsformen

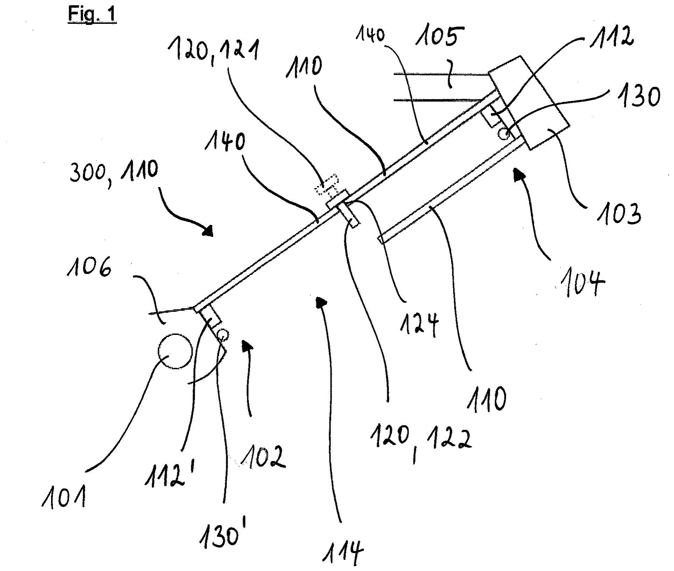

Figur 1 zeigt einen Schnitt durch ein Rahmenrohr 110 als eine Fahrradkomponente 300 für ein elektrisch antreibbares Fahrrad. Ein in Figur 1 in einer schematischen Schnittansicht gezeigter Fahrradrahmen kann das Rahmenrohr 110 aufweisen. Das in Figur 1 gezeigte Rahmenrohr 110 kann mit einer oder mit zwei in Figur 1 nicht gezeigten elektrischen Energiespeichereinrichtungen beladen sein.

Der Fahrradrahmen kann ein Oberrohr 105 aufweisen. Das Rahmenrohr 110 kann mit dem Oberrohr 105 an einem steuerrohrnahen Endbereich 104 des Rahmenrohrs 110 verbunden sein. Bei dem steuerrohrnahen Endbereich 104 kann es sich um einen steuerrohrseitigen Endbereich handeln. Der Fahrradrahmen kann ein Steuerrohr 103 aufweisen. Das Rahmenrohr 110 kann mit dem Steuerrohr 103 an dem steuerrohrnahen Endbereich 104 verbunden sein. Das Steuerrohr 103 kann mit dem Oberrohr 105 verbunden sein.

Der Fahrradrahmen kann einen Tretlageraufnahmebereich 106 aufweisen. Das Rahmenrohr 110 kann mit dem Tretlageraufnahmebereich 106 an einem tretlagernahen Endbereich 102 des Rahmenrohrs 110 verbunden sein. Bei dem tretlagernahen Endbereich 102 kann es sich um einen tretlagerseitigen Endbereich handeln. Der Tretlageraufnahmebereich 106 kann ein Tretlager 101 aufweisen, welches in dem Tretlageraufnahmebereich 106 angeordnet sein kann.

Das Rahmenrohr 110 weist eine Rohröffnung 114 auf. Die Rohröffnung 114 kann benachbart zu dem tretlagernahen Endbereich 102 des Rahmenrohrs 110 angeordnet sein. An der Rohröffnung 114 kann ein in Figur 1 nicht gezeigter Rohrabschnitt angeordnet sein, welcher abnehmbar oder beweglich an dem Rahmenrohr 110 oder an dem Tretlageraufnahmebereich 106 angeordnet sein kann. Durch die Rohröffnung 114 können eine oder zwei in Figur 1 nicht gezeigte elektrische Energiespeichereinrichtungen in das Rahmenrohr 110 eingeführt werden. Zwei elektrische Energiespeichereinrichtungen können nacheinander beziehungsweise separat in das Rahmenrohr 110 eingeführt werden.

In dem Rahmenrohr 110 sind elektrische Kontakte 112, 112' angeordnet. Ein elektrischer Kontakt 112 kann an dem steuerrohrnahen Endbereich 104 des Rahmenrohrs 110 angeordnet sein. Der elektrische Kontakt 112 kann innerhalb des Rahmenrohrs 110 angeordnet sein. Ein weiterer elektrischer Kontakt 112' kann an dem tretlagernahen Endbereich 102 des Rahmenrohrs 110 angeordnet sein. Der weitere elektrische Kontakt 112' kann innerhalb des Rahmenrohrs 110 angeordnet sein.

Die elektrischen Kontakte 112, 112' können an einem oberen Rohrbereich des Rahmenrohrs 110, wie in Figur 1 gezeigt, angeordnet sein. Das Rahmenrohr 110 kann einen Kabelraum 140 aufweisen. Der Kabelraum 140 kann in einem durch das Rahmenrohr 110 ausgebildeten Rohrhohlkörper ausgebildet sein. Die elektrischen Kontakte 112, 112' können benachbart zu dem Kabelraum 140 an dem Rahmenrohr 110 beziehungsweise innerhalb des Rahmenrohrs 110 angeordnet sein.

Das Rahmenrohr 110 kann Aufnahmeelemente 130, 130' zum jeweiligen Aufnehmen von mindestens einer in Figur 1 nicht gezeigten elektrischen Energiespeichereinrichtung aufweisen. Die Aufnahmeelemente 130, 130' können jeweils benachbart zu den elektrischen Kontakten 112, 112' an dem Rahmenrohr 110 angeordnet sein. Die Aufnahmeelemente 130, 130' können jeweils beabstandet zu den elektrischen Kontakten 112, 112' an dem Rahmenrohr 110 angeordnet sein.

Ein Aufnahmeelement 130 kann an dem steuerrohrnahen Endbereich 104 des Rahmenrohrs 110 angeordnet sein. Das Aufnahmeelement 130 kann innerhalb des Rahmenrohrs 110 angeordnet sein. Ein weiteres Aufnahmeelement 130' kann an dem tretlagernahen Endbereich 102 des Rahmenrohrs 110 angeordnet sein. Das weitere Aufnahmeelement 130 kann innerhalb des Rahmenrohrs 110 angeordnet sein. Die elektrischen Kontakte 112, 112' und/oder die Aufnahmeelemente 130, 130' können sich jeweils, insbesondere innerhalb des Rahmenrohr 110, gegenüberliegen. Zwischen den elektrischen Kontakten 112, 112' und/oder den Aufnahmeelementen 130, 130' können zwei in Figur 1 nicht gezeigte elektrische Energiespeichereinrichtungen angeordnet sein, beziehungsweise durch die Rohröffnung 114 in das Rahmenrohr 110 eingeführt werden.

Das Rahmenrohr 110 kann eine Verriegelungsöffnung 124 zum Aufnehmen von einer Verriegelungseinrichtung 120 aufweisen. Die Verriegelungseinrichtung 120 ist in Figur 1 in einem entriegelten Zustand 121 (strichliert gezeigt) und in einem verriegelten Zustand 122 gezeigt. In beiden Zuständen 121, 122 ist die Verriegelungseinrichtung 120 in der Verriegelungsöffnung 124 aufgenommen. Mit der Verriegelungseinrichtung 120 kann wahlweise eine oder können zwei in dem Rahmenrohr 110 aufgenommene elektrische Energiespeichereinrichtungen in dem Rahmenrohr 110 verriegelt werden.

Die Verriegelungseinrichtung 120 kann in einem mittigen beziehungsweise zentralen Rahmenbereich zwischen dem tretlagernahen Endbereich 102 des Rahmenrohrs 110 und dem steuerrohrnahen Endbereich 104 des Rahmenrohrs 110 angeordnet sein. Bei der Verriegelungseinrichtung 120 kann es sich um eine Zentralverriegelung handeln, welche zwei in Figur 1 gezeigte elektrische Energiespeichereinrichtungen gleichzeitig und/oder mittig verriegeln kann.

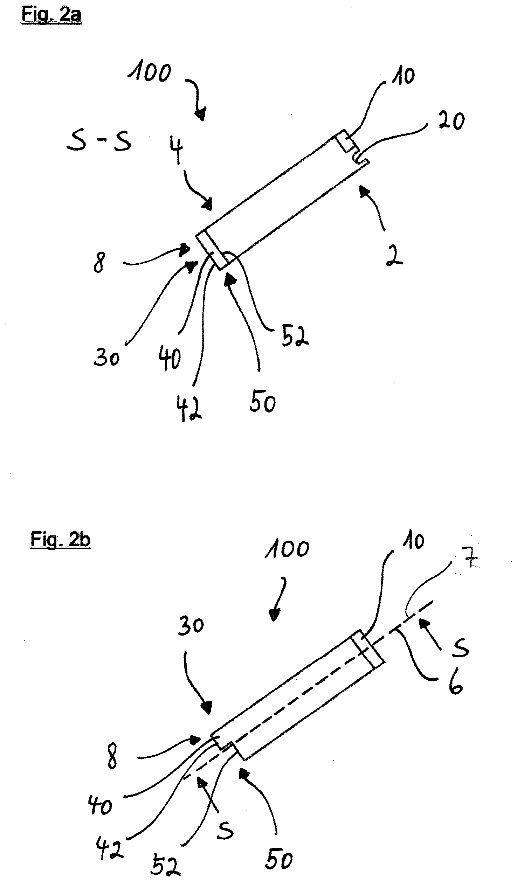

Figur 2a zeigt eine elektrische Energiespeichereinrichtung 100 für ein elektrisch antreibbares Fahrrad in einer seitlichen Schnittansicht als Ansicht auf die in Figur 2b eingezeichnete Ebene S-S. Die elektrische Energiespeichereinrichtung 100 ist in einer Ausführungsform als ein Akkumulator ausgebildet. Die elektrische Energiespeichereinrichtung 100 weist in einer weiteren Ausführungsform einen Kondensator auf. Die elektrische Energiespeichereinrichtung 100 kann wie in Figur 2a gezeigt als ein längliches Bauteil ausgebildet sein.

Die elektrische Energiespeichereinrichtung 100 weist an einem ersten Endbereich 2 einen elektrischen Kontakt 10 auf. Der elektrische Kontakt kann sich über eine Seite der elektrische Energiespeichereinrichtung 100 erstrecken oder mittig an mindestens einer Seite angeordnet sein. Die elektrische Energiespeichereinrichtung 100 kann an dem ersten Endbereich 2 ein Haltelement 20 aufweisen. In einer Ausführungsform, wie in Figur 2a gezeigt, ist das Halteelement 20 als eine Ausnehmung in dem ersten Endbereich 2 ausgebildet. Die Ausnehmung kann in einer Ausführungsform in eines der Aufnahmeelemente 130, 130' des Rahmenrohrs 110 eingreifen oder einrasten. Die Ausnehmung kann in einer weiteren Ausführungsform an einem der Aufnahmeelemente 130, 130' des Rahmenrohrs 110 schwenkbar gelagert oder angeordnet werden.

Die elektrische Energiespeichereinrichtung 100 weist an einem zweiten Endbereich 4, welcher gegenüberliegend zu dem ersten Endbereich 2 an der elektrischen Energiespeichereinrichtung 100 angeordnet ist, eine Verriegelungsanordnung 30 auf. Die Verriegelungsanordnung 30 weist einen Vorsprung 8 auf. Der Vorsprung 8 ist, wie in Figur 2b gezeigt, neben beziehungsweise außermittig zu der Ebene S-S beziehungsweise zu einer Längsachse durch die Ebene S-S an dem zweiten Endbereich 2 angeordnet.

Die in den Figuren 2a und 2b gezeigte Verriegelungsanordnung 30 der elektrischen Energiespeichereinrichtung 100 kann einen Endbereichsvorsprung 40 und eine Endbereichsausnehmung 50 aufweisen. Der Endbereichsvorsprung 40 kann dem Vorsprung 8 entsprechen beziehungsweise diesen aufweisen. Der Endbereichsvorsprung 40 kann seitlich zu der Ebene S-S beziehungsweise zu einer Längsebene 6 oder einer Längsachse 7 der Energiespeichereinrichtung 100 angeordnet sein. Die Ebene S-S kann der Längsebene 6 entsprechen. Die Endbereichsausnehmung 50 kann an der Ebene S-S beziehungsweise an der Längsachse 7 zu dem Endbereichsvorsprung 40 gespiegelt angeordnet sein. Der zweiten Endbereich 2 kann somit eine durch den Endbereichsvorsprung 40 und die Endbereichsausnehmung 50 ausgebildete Asymmetrie bezüglich der Ebene S-S beziehungsweise zu der Längsachse 7 aufweisen.

Der Endbereichsvorsprung 40 kann einen Vorsprungsumriss 42 aufweisen, welcher in dem in Figur 2b gezeigten Ansichtsprofil rechtwinklig ausgebildet sein kann. Der Endbereichsvorsprung 40 kann zur Längsachse 7, welche eine Mittenachse ausbilden kann, beabstandet sein. Die Endbereichsausnehmung 50 kann einen Ausnehmungsumriss 52 aufweisen, welcher in dem in Figur 2b gezeigten Ansichtsprofil rechtwinklig ausgebildet sein kann. Die Endbereichsausnehmung 50 kann sich über die Längsachse 7 erstrecken. Die Form des Endbereichsvorsprungs 40 beziehungsweise des Vorsprungsumriss 42 kann von der Form der Endbereichsausnehmung 50 beziehungsweise von dem Endbereichsumriss 52 geometrisch umfasst sein. Der Endbereichsvorsprungs 40 kann kleiner als die Endbereichsausnehmung 50 sein. Die Endbereichsausnehmung 50 kann größer als der Endbereichsvorsprungs 40 sein.

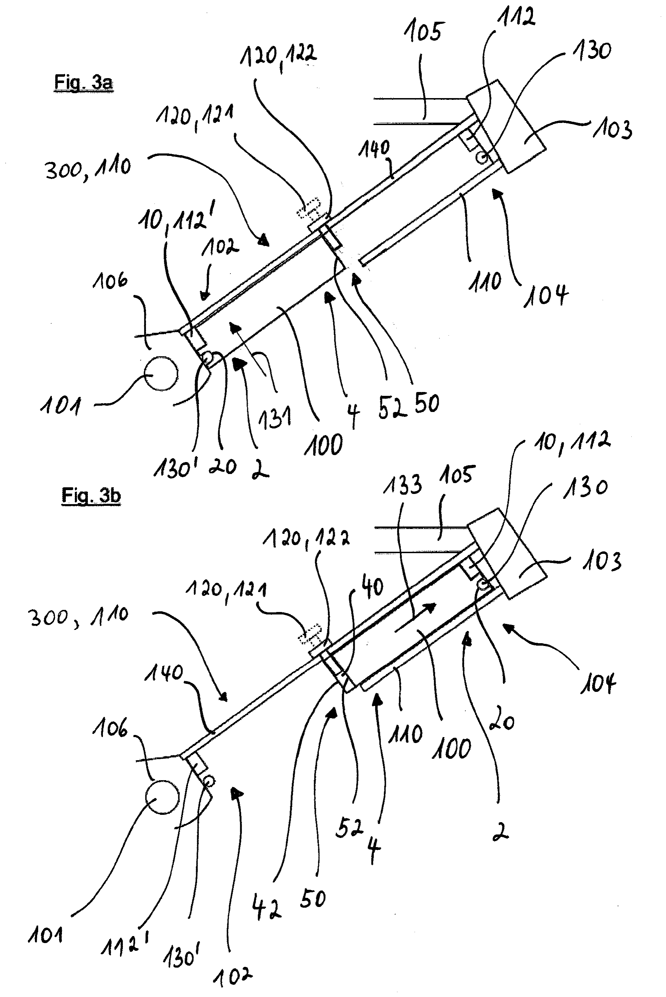

Wie in den Figuren 3a und 3b gezeigt kann die elektrische Energiespeichereinrichtung 100 in dem Rahmenrohr 110 angeordnet sein. Die elektrische Energiespeichereinrichtung 100 kann wie in Figur 3a gezeigt in einer unteren beziehungsweise tretlagernahen Anordnung in dem Rahmenrohr 110 angeordnet sein. Alternativ oder zusätzlich kann die elektrische Energiespeichereinrichtung 100 als eine weitere elektrische Energiespeichereinrichtung wie in Figur 3b gezeigt in einer oberen beziehungsweise steuerrohrnahen Anordnung in dem Rahmenrohr 110 angeordnet sein.

In der in Figur 3a gezeigten unteren beziehungsweise tretlagernahen Anordnung der elektrischen Energiespeichereinrichtung 100 in dem Rahmenrohr 110 sind die elektrischen Kontakte 10 der elektrischen Energiespeichereinrichtung 100 mit den tretlagernahen elektrischen Kontakten 112' des Rahmenrohrs 110 elektrisch verbunden. Die elektrischen Kontakte 10 der elektrischen Energiespeichereinrichtung 100 können mit den tretlagernahen elektrischen Kontakten 112' des Rahmenrohrs 110 dadurch elektrisch verbunden werden, dass die elektrische Energiespeichereinrichtung 100 in der in Figur 3a gezeigten radialen Bewegungsrichtung 131, welche radial zum Rahmenrohr 110 ausgebildet ist, durch die Rohröffnung 114 in das Rahmenrohr 110 eingeführt wird. Beim Einführen der elektrischen Energiespeichereinrichtung 100 in radialer Bewegungsrichtung 131 in das Rahmenrohr 110 können die elektrischen Kontakte 10 der elektrischen Energiespeichereinrichtung 100 mit den tretlagernahen elektrischen Kontakten 112' des Rahmenrohrs 110 in der radialen Bewegungsrichtung 131 elektrisch verbunden werden. Das Halteelement 20 kann sich dann zudem in Eingriff mit dem tretlagernahen Aufnahmeelement 130' befinden.

In dem in Figur 3a gezeigten Schnitt durch das Rahmenrohr 110 und durch die in dem Rahmenrohr aufgenommene elektrische Energiespeichereinrichtung 100 ist der Endbereichsvorsprung 40 der elektrischen Energiespeichereinrichtung 100 nicht sichtbar. Die Verriegelungseinrichtung 120 kann in ihrem verriegelten Zustand 122 die in dem Rahmenrohr 110 unten beziehungsweise tretlagerseitig aufgenommene elektrische Energiespeichereinrichtung 100 einzeln verriegeln.

In der in Figur 3b gezeigten oberen beziehungsweise steuerrohrnahen Anordnung der elektrischen Energiespeichereinrichtung 100 in dem Rahmenrohr 110 sind die elektrischen Kontakte 10 der elektrischen Energiespeichereinrichtung 100 mit den steuerrohrnahen elektrischen Kontakten 112 des Rahmenrohrs 110 elektrisch verbunden. Die elektrischen Kontakte 10 der elektrischen Energiespeichereinrichtung 100 können mit den steuerrohrnahen elektrischen Kontakten 112 des Rahmenrohrs 110 dadurch elektrisch verbunden werden, dass die elektrische Energiespeichereinrichtung 100 in der in Figur 3b gezeigten axialen Bewegungsrichtung 133, welche axial zum Rahmenrohr 110 beziehungsweise parallel zu einer Rohrmittenachse ausgebildet ist, in dem Rahmenrohr 110 nach oben geschoben wird. Beim Einschieben der elektrischen Energiespeichereinrichtung 100 in axialer Bewegungsrichtung 133 in dem Rahmenrohr 110 können die elektrischen Kontakte 10 der elektrischen Energiespeichereinrichtung 100 mit den steuerrohrnahen elektrischen Kontakten 112 des Rahmenrohrs 110 in der axialen Bewegungsrichtung 133 elektrisch verbunden werden. Das Halteelement 20 kann sich dann zudem in Eingriff mit dem steuerrohrnahen Aufnahmeelement 130 befinden.

In dem in Figur 3b gezeigten Schnitt durch das Rahmenrohr 110 und durch die in dem Rahmenrohr aufgenommene elektrische Energiespeichereinrichtung 100 ist der Endbereichsvorsprung 40 der elektrischen Energiespeichereinrichtung 100 sichtbar. Die Verriegelungseinrichtung 120 kann in ihrem verriegelten Zustand 122 die in dem Rahmenrohr 110 oben beziehungsweise steuerrohrseitig aufgenommene elektrische Energiespeichereinrichtung 100 einzeln verriegeln.

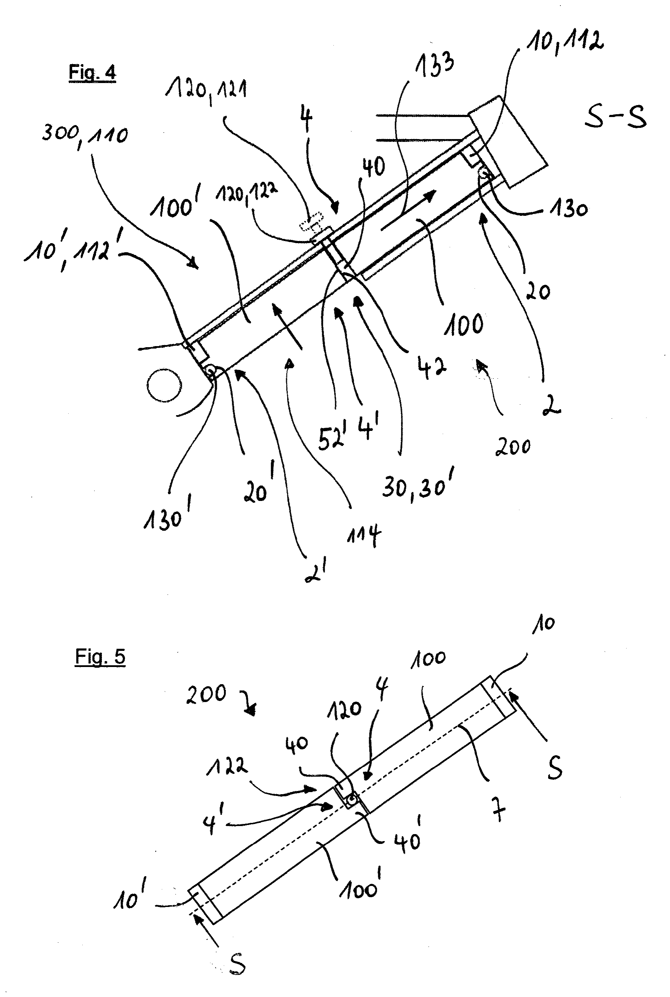

Wie in Figur 4 gezeigt, können zwei elektrische Energiespeichereinrichtungen 100, 100' als ein elektrisches Energiespeichersystem 200 in dem Rahmenrohr 110 angeordnet sein. Bei den beiden Energiespeichereinrichtungen 100, 100' handelt es sich jeweils um dieselbe der in den Figuren 2a und 2b gezeigten Energiespeichereinrichtung 100. Die beiden Energiespeichereinheiten 100, 100' sind daher gleich ausgebildet, jedoch anders in dem Rahmenrohr 110 angeordnet. Bei den elektrischen Kontakten 10, 10' der beiden elektrischen Energiespeichereinheiten 100, 100' kann es sich daher auch um gleich ausgebildete elektrische Kontakte 10, 10' handeln. Auch bei den Halteelementen 20, 20' der beiden elektrischen Energiespeichereinheiten 100, 100' kann es sich daher auch um gleich ausgebildete Halteelemente 20, 20' handeln.

Die in Figur 4 gezeigte unten beziehungsweise tretlagerseitig oder tretlagernah angeordnete Energiespeichereinrichtung 100' entspricht der in Figur 3a gezeigten Energiespeichereinrichtungsanordnung. Die in Figur 4 gezeigte oben beziehungsweise steuerrohrseitig oder steuerrohrnah angeordnete Energiespeichereinrichtung 100 entspricht der in Figur 3b gezeigten Energiespeichereinrichtungsanordnung. Kombiniert man die in den Figuren 3a und 3b jeweils gezeigten elektrischen Energiespeichereinrichtungen 100 gelangt man daher zu der in Figur 4 gezeigten doppelten Anordnung von den zwei elektrischen Energiespeichereinrichtungen 100, 100'. Dabei kann zunächst die obere elektrische Energiespeichereinrichtung 100 in axialer Bewegungsrichtung 133 eingeschoben werden und dann die untere elektrische Energiespeichereinrichtung 100' in radialer Bewegungsrichtung 131 durch die Rohröffnung 114 in das Rahmenrohr 110 eingeführt werden.

Bei der in Figur 4 gezeigten unten angeordneten elektrischen Energiespeichereinrichtung 100' in dem Rahmenrohr 110 sind die elektrischen Kontakte 10' der elektrischen Energiespeichereinrichtung 100' mit den tretlagernahen elektrischen Kontakten 112' des Rahmenrohrs 110 elektrisch verbunden. Das Halteelement 20' der elektrischen Energiespeichereinrichtung 100' kann sich dann zudem in Eingriff mit dem tretlagernahen Aufnahmeelement 130' befinden.

In dem in Figur 4 gezeigten Schnitt durch das Rahmenrohr 110 und durch die in dem Rahmenrohr 110 aufgenommenen elektrischen Energiespeichereinrichtungen 100, 100' ist nur der Endbereichsvorsprung 40 der oben angeordneten elektrischen Energiespeichereinrichtung 100 sichtbar. Der Endbereichsvorsprung der unten angeordneten elektrischen Energiespeichereinrichtung 100 ist dagegen nicht sichtbar. Die Verriegelungseinrichtung 120 kann in ihrem verriegelten Zustand 122 beide in dem Rahmenrohr 110 aufgenommenen elektrischen Energiespeichereinrichtungen 100, 100' verriegeln. Dabei kann die Verriegelungseinrichtung 120 in ihrem verriegelten Zustand 122 in beide elektrischen Energiespeichereinrichtungen 100, 100' eingreifen.

In Figur 5 sind die beiden in dem Rahmenrohr 110 aufgenommenen elektrischen Energiespeichereinrichtungen 100, 100' als elektrisches Energiespeichersystem 200 isoliert gezeigt. Die in Figur 4 gezeigte Schnittansicht S-S auf die elektrischen Energiespeichereinrichtungen 100, 100' ist in Figur 5 gezeigt. Die in Figur 5 gezeigte Draufsicht entspricht der in Figur 2b gewählten Ansicht. Die Verriegelungseinrichtung 120 kann sich in ihrem verriegelten Zustand 122 zwischen den beiden Endbereichsvorsprüngen 40, 40' der beiden in dem Rahmenrohr 110 aufgenommenen elektrischen Energiespeichereinrichtungen 100, 100' befinden. An der Verriegelungseinrichtung 120 kann ein in den Figuren nicht gezeigtes Verriegelungselement angeordnet sein, welches in die beiden zweiten Endbereiche 4, 4' der beiden elektrischen Energiespeichereinrichtungen 100, 100' in dem verriegelten Zustand 122 eingreifen kann.

### Bezugszeichen

- 2, 2': erster Endbereich
- 4, 4': zweiter Endbereich
- 6: Längsebene
- 7: Längsachse
- 8: Vorsprung
- 10, 10': energiespeicherseitige elektrische Kontakte
- 20, 20': Halteelement
- 30, 30': Verriegelungsanordnung
- 40, 40': Endbereichsvorsprung
- 42: Vorsprungsumriss
- 50: Endbereichsausnehmung
- 52: Ausnehmungsumriss
- 100, 100': elektrische Energiespeichereinrichtung
- 101: Tretlager
- 102: tretlagernaher Endbereich
- 103: Steuerrohr
- 104: steuerrohrnaher Endbereich
- 105: Oberrohr
- 106: Tretlageraufnahmebereich
- 110: Rahmenrohr
- 112, 112': fahrradseitige elektrische Kontakte
- 114: Rohröffnung
- 120: Verriegelungseinrichtung
- 121: entriegelter Zustand
- 122: verriegelter Zustand
- 124: Verriegelungsöffnung
- 131: radiale Bewegungsrichtung
- 133: axiale Bewegungsrichtung
- 130, 130': Aufnahmeelement
- 140: Kabelraum
- 200: elektrisches Energiespeichersystem
- 300: Fahrradkomponente

## Patentansprüche

1. Elektrische Energiespeichereinrichtung (100), insbesondere Akkumulator, für ein elektrisch antreibbares Fahrrad, mit
energiespeicherseitigen elektrischen Kontakten (10), welche dazu eingerichtet sind, um mit fahrradseitigen elektrischen Kontakten (112) lösbar elektrisch verbunden zu werden, wobei die energiespeicherseitigen elektrischen Kontakte (10) an einem ersten Endbereich (2) der elektrischen Energiespeichereinrichtung (100) angeordnet sind,
einer energiespeicherseitigen Verriegelungsanordnung (30) zum Verriegeln der elektrischen Energiespeichereinrichtung (100) an dem Fahrrad, insbesondere an einer Fahrradkomponente (300) des Fahrrads,
wobei die energiespeicherseitige Verriegelungsanordnung (30) an einem zu dem ersten Endbereich (2) gegenüberliegenden zweiten Endbereich (4) der elektrischen Energiespeichereinrichtung (100) angeordnet ist,
wobei die energiespeicherseitige Verriegelungsanordnung (30) einen außermittigen Vorsprung (8) aufweist, welcher außermittig an dem zweiten Endbereich (4) angeordnet ist,
wobei die energiespeicherseitige Verriegelungsanordnung (30) einen an dem zweiten Endbereich (4) angeordneten Endbereichsvorsprung (40) und eine an dem zweiten Endbereich (4) angeordnete Endbereichsausnehmung (50) aufweist,
**dadurch gekennzeichnet, dass**
die Endbereichsausnehmung (50) einen Ausnehmungsumriss (52) aufweist, welcher gespiegelt an einer Längsebene (6) durch die elektrische Energiespeichereinrichtung (100) einen Vorsprungsumriss (42) des Endbereichsvorsprungs (40) umfasst.

2. Elektrische Energiespeichereinrichtung (100) nach Anspruch 1,
**dadurch gekennzeichnet, dass**
die energiespeicherseitigen elektrischen Kontakte (10) zum Herstellen eines elektrischen Kontakts mit den fahrradseitigen elektrischen Kontakten (112) derart ausgebildet sind, dass sie mit den fahrradseitigen elektrischen Kontakten (112) mit verschiedenen relativen Bewegungen der energiespeicherseitigen elektrischen Kontakte (10) zu den fahrradseitigen elektrischen Kontakten (112), welche insbesondere verschiedene relative Bewegungsrichtungen der energiespeicherseitigen elektrischen Kontakte (10) zu den fahrradseitigen elektrischen Kontakten (112) aufweisen, lösbar elektrisch verbindbar sind.

3. Elektrische Energiespeichereinrichtung (100) nach Anspruch 1 oder 2,
**dadurch gekennzeichnet, dass**
die elektrische Energiespeichereinrichtung (100) ein Halteelement (20) zum Halten der elektrischen Energiespeichereinrichtung (100) an dem Fahrrad, insbesondere an der Fahrradkomponente (300), aufweist,
wobei das Halteelement (20) derart ausgebildet ist, um die elektrische Energiespeichereinrichtung (100) schwenkbar an dem Fahrrad, insbesondere an der Fahrradkomponente (300), zu halten.

4. Elektrische Energiespeichereinrichtung (100) nach Anspruch 3,
**dadurch gekennzeichnet, dass**
das Halteelement (20) derart ausgebildet ist, um die elektrische Energiespeichereinrichtung (100) mit dem Fahrrad, insbesondere mit der Fahrradkomponente (300) in Eingriff zu bringen.

5. Elektrisches Energiespeichersystem (200), insbesondere Akkumulatorsystem, für ein elektrisch antreibbares Fahrrad,
welches zwei elektrische Energiespeichereinrichtungen (100, 100'), insbesondere zwei Akkumulatoren, für ein elektrisch antreibbares Fahrrad, aufweist,
**dadurch gekennzeichnet, dass**
das elektrische Energiespeichersystem (200) als die zwei elektrischen Energiespeichereinrichtungen (100, 100') jeweils die elektrische Energiespeichereinrichtung (100) nach einem der Ansprüche 1 bis 4 aufweist,
wobei die Verriegelungsanordnungen (30, 30') der zwei elektrischen Energiespeichereinrichtungen (100, 100') in einem aneinander angeordneten Zustand zumindest bereichsweise ineinandergreifen.

6. Fahrradkomponente (300), insbesondere Rahmenrohr (110), für ein elektrisch antreibbares Fahrrad,
**dadurch gekennzeichnet, dass**
die Fahrradkomponente (300) zum Aufnehmen von zwei elektrischen Energiespeichereinrichtungen (100, 100') nach einem der Ansprüche 1 bis 4 oder von einem elektrischen Energiespeichersystem (200) nach Anspruch 5 ausgebildet ist.

7. Fahrradkomponente (300) nach Anspruch 6,
**dadurch gekennzeichnet, dass**
in der Fahrradkomponente (300) elektrische Kontakte (112, 112') angeordnet sind, welche dazu eingerichtet sind, um mit den jeweiligen energiespeicherseitigen elektrischen Kontakten (10, 10') der zwei in der Fahrradkomponente (300) aufnehmbaren elektrischen Energiespeichereinrichtungen (100, 100') lösbar elektrisch verbunden zu werden, wobei die in der Fahrradkomponente (300) angeordneten elektrischen Kontakte (112, 112') an gegenüberliegenden Endbereichen (102, 104) der Fahrradkomponente (300), insbesondere an einem tretlagernahen Endbereich (102) eines Rahmenrohrs (110) und an einem steuerrohrnahen Endbereich (104) des Rahmenrohrs (110), angeordnet sind.

8. Fahrradkomponente (300) nach Anspruch 6 oder 7,
**dadurch gekennzeichnet, dass**
an der Fahrradkomponente (300) eine Verriegelungseinrichtung (120) zum Verriegeln von den zwei in der Fahrradkomponente (300) aufnehmbaren elektrischen Energiespeichereinrichtungen (100, 100') angeordnet ist.

9. Fahrradkomponente (300) nach Anspruch 8,
**dadurch gekennzeichnet, dass**
die Verriegelungseinrichtung (120) derart ausgebildet ist, um mit den energiespeicherseitigen Verriegelungsanordnungen (30, 30') der zwei in der Fahrradkomponente (300) aufnehmbaren elektrischen Energiespeichereinrichtungen (100, 100') zusammenzuwirken, insbesondere um wahlweise in mindestens eine Verriegelungsanordnung (30, 30') der zwei elektrischen Energiespeichereinrichtungen (100, 100') einzugreifen.

10. Fahrradkomponente (300) nach Anspruch 8 oder 9,
**dadurch gekennzeichnet, dass**
die Verriegelungseinrichtung (120) verschiebbar an der Fahrradkomponente (300) angeordnet ist, um mindestens eine der zwei in der Fahrradkomponente (300) aufnehmbaren elektrischen Energiespeichereinrichtungen (100, 100') in einem in die Fahrradkomponente (300) geschobenen Zustand der Verriegelungseinrichtung (120) zu verriegeln.

11. Fahrradkomponente (300) nach einem der Ansprüche 8 bis 10,
**dadurch gekennzeichnet, dass**
die Fahrradkomponente (300) einen Kabelraum (140) zum Aufnehmen von mindestens einem Kabel aufweist,
wobei die Verriegelungseinrichtung (120) zumindest teilweise durch den Kabelraum (140) durchragend angeordnet ist.

12. Fahrradkomponente (300) nach einem der Ansprüche 8 bis 11,
**dadurch gekennzeichnet, dass**
die Verriegelungseinrichtung (120) eine drehbare Verriegelung zum drehenden Verriegeln von den zwei in der Fahrradkomponente (300) aufnehmbaren elektrischen Energiespeichereinrichtungen (100, 100') und/oder eine steckbare Verriegelung zum steckenden Verriegeln von den zwei in der Fahrradkomponente (300) aufnehmbaren elektrischen Energiespeichereinrichtungen (100, 100') aufweist.

13. Fahrradkomponente (300) nach einem der Ansprüche 6 bis 12,
**dadurch gekennzeichnet, dass**
die Fahrradkomponente (300) eine Energiesteuerungseinrichtung, welche mit den in der Fahrradkomponente (300) angeordneten elektrischen Kontakten (112, 112') verbunden ist, um Energie von einer oder von beiden der in der Fahrradkomponente (300) aufnehmbaren elektrischen Energiespeichereinrichtungen (100, 100') auf einem elektrisch antreibbaren Fahrrad selektiv bereitzustellen, aufweist.

14. Elektrisch antreibbares Fahrrad, welches eine Fahrradkomponente (300) nach einem der Ansprüche 6 bis 13 aufweist.

## Claims

1. Electrical energy storage device (100), in particular a rechargeable battery, for an electrically driveable bicycle, comprising
energy store-side electrical contacts (10), which are designed to be releasably electrically connected to bicycle-side electrical contacts (112), wherein the energy store-side electrical contacts (10) are arranged at a first end region (2) of the electrical energy storage device (100),
an energy store-side locking arrangement (30) for locking the electrical energy storage device (100) to the bicycle, in particular to a component (300) of the bicycle,
wherein the energy store-side locking arrangement (30) is arranged at a second end region (4), situated opposite the first end region (2), of the electrical energy storage device (100),
wherein the energy store-side locking arrangement (30) has an eccentric protrusion (8), which is arranged eccentrically at the second end region (4),
wherein the energy store-side locking arrangement (30) has an end region protrusion (40) arranged at the second end region (4) and an end region recess (50) arranged at the second end region (4),
**characterized in that**
the end region recess (50) has a recess contour (52) which, reflected at a longitudinal plane (6) through the electrical energy storage device (100), covers a protrusion contour (42) of the end region protrusion (40).

2. Electrical energy storage device (100) according to Claim 1,
**characterized in that**
the energy store-side electrical contacts (10) are designed to establish electrical contact with the bicycle-side electrical contacts (112) in such a way that they can be releasably electrically connected to the bicycle-side electrical contacts (112) by way of different relative movements of the energy store-side electrical contacts (10) with respect to the bicycle-side electrical contacts (112), the relative movements in particular having different relative movement directions of the energy store-side electrical contacts (10) with respect to the bicycle-side electrical contacts (112).

3. Electrical energy storage device (100) according to Claim 1 or 2,
**characterized in that**
the electrical energy storage device (100) has a retaining element (20) for retaining the electrical energy storage device (100) on the bicycle, in particular on the bicycle component (300),
wherein the retaining element (20) is designed in such a way as to pivotably retain the electrical energy storage device (100) on the bicycle, in particular on the bicycle component (300).

4. Electrical energy storage device (100) according to Claim 3,
**characterized in that**
the retaining element (20) is designed in such a way as to bring the electrical energy storage device (100) into engagement with the bicycle, in particular with the bicycle component (300).

5. Electrical energy storage system (200), in particular a rechargeable battery system, for an electrically driveable bicycle,
the electrical energy storage system having two electrical energy storage devices (100, 100'), in particular two rechargeable batteries, for an electrically driveable bicycle,
**characterized in that**
the electrical energy storage system (200) has the electrical energy storage device (100) according to any of Claims 1 to 4 as both of the two electrical energy storage devices (100, 100'),
wherein the locking arrangements (30, 30') of the two electrical energy storage devices (100, 100') interengage at least in regions in a state in which they are arranged one against the another.

6. Bicycle component (300), in particular a frame tube (110), for an electrically driveable bicycle,
**characterized in that**
the bicycle component (300) is designed to receive two electrical energy storage devices (100, 100') according to any of Claims 1 to 4 or an electrical energy storage system (200) according to Claim 5.

7. Bicycle component (300) according to Claim 6,
**characterized in that**
electrical contacts (112, 112') are arranged in the bicycle component (300), the electrical contacts being designed to be releasably electrically connected to the respective energy store-side electrical contacts (10, 10') of the two electrical energy storage devices (100, 100') receivable in the bicycle component (300), wherein the electrical contacts (112, 112') arranged in the bicycle component (300) are arranged at opposite end regions (102, 104) of the bicycle component (300), in particular at an end region (102) of a frame tube (110) that is close to the bottom bracket and at an end region (104) of the frame tube (110) that is close to the head tube.

8. Bicycle component (300) according to Claim 6 or 7,
**characterized in that**
a locking device (120) for locking the two electrical energy storage devices (100, 100') receivable in the bicycle component (300) is arranged on the bicycle component (300).

9. Bicycle component (300) according to Claim 8,
**characterized in that**
the locking device (120) is designed in such a way as to interact with the energy store-side locking arrangements (30, 30') of the two electrical energy storage devices (100, 100') receivable in the bicycle component (300), in particular so as to selectively engage into at least one locking arrangement (30, 30') of the two electrical energy storage devices (100, 100').

10. Bicycle component (300) according to Claim 8 or 9,
**characterized in that**
the locking device (120) is arranged displaceably on the bicycle component (300) in order to lock at least one of the two electrical energy storage devices (100, 100') receivable in the bicycle component (300) in a state in which the locking device (120) is pushed into the bicycle component (300).

11. Bicycle component (300) according to any of Claims 8 to 10,
**characterized in that**
the bicycle component (300) has a cable compartment (140) for receiving at least one cable,
wherein the locking device (120) is arranged in a manner at least partially passing through the cable compartment (140).

12. Bicycle component (300) according to any of Claims 8 to 11,
**characterized in that**
the locking device (120) has a rotatable locking system for rotationally locking the two electrical energy storage devices (100, 100') receivable in the bicycle component (300) and/or an insertable locking system for insertion-locking the two electrical energy storage devices (100, 100') receivable in the bicycle component (300).

13. Bicycle component (300) according to any of Claims 6 to 12,
**characterized in that**
the bicycle component (300) has an energy control device, which is connected to the electrical contacts (112, 112') arranged in the bicycle component (300) in order to selectively provide energy from one or from both of the electrical energy storage devices (100, 100') receivable in the bicycle component (300) to an electrically driveable bicycle.

14. Electrically driveable bicycle, which has a bicycle component (300) according to any of Claims 6 to 13.

## Revendications

1. Dispositif (100) d'accumulation d'énergie électrique, en particulier accumulateur, pour un vélo à entraînement électrique, comprenant
des contacts électriques (10) côté accumulateur d'énergie qui sont conçus pour être connectés électriquement de manière amovible à des contacts électriques (112) côté vélo,
les contacts électriques (10) côté accumulateur d'énergie étant agencés sur une première zone d'extrémité (2) du dispositif (100) d'accumulation d'énergie électrique,
un agencement de verrouillage (30) côté accumulateur d'énergie pour verrouiller le dispositif (100) d'accumulation d'énergie électrique au vélo, en particulier à un composant de vélo (300) du vélo,
le dispositif de verrouillage (30) côté accumulateur d'énergie étant agencé sur une deuxième zone d'extrémité (4) du dispositif (100) d'accumulation d'énergie électrique qui est opposée à la première zone d'extrémité (2),
l'agencement de verrouillage côté accumulateur d'énergie (30) présentant une saillie excentrique (8) qui est agencée de manière excentrique sur la seconde partie d'extrémité (4),
l'agencement de verrouillage (30) côté accumulateur d'énergie présentant une saillie de zone d'extrémité (40) agencée sur la deuxième zone d'extrémité (4) et un évidement de zone d'extrémité (50) agencé sur la deuxième zone d'extrémité (4),
**caractérisé en ce que**
l'évidement de zone d'extrémité (50) présente un contour d'évidement (52) qui, en miroir par rapport à un plan longitudinal (6) passant à travers le dispositif de stockage d'énergie électrique (100), comprend un contour de saillie (42) de la saillie de zone d'extrémité (40).

2. Dispositif (100) d'accumulation d'énergie électrique selon la revendication 1, **caractérisé en ce que**
les contacts électriques (10) côté accumulateur d'énergie sont conçus pour établir un contact électrique avec les contacts électriques (112) côté vélo de telle sorte qu'ils puissent être connectés électriquement de manière amovible aux contacts électriques (112) côté vélo avec différents mouvements relatifs des contacts électriques (10) côté accumulateur d'énergie par rapport aux contacts électriques (112) côté vélo, lesquels présentent en particulier des directions de mouvement relatives différentes de celles des contacts électriques (10) côté accumulateur d'énergie par rapport aux contacts électriques (112) côté vélo.

3. Dispositif (100) d'accumulation d'énergie électrique selon la revendication 1 ou 2, **caractérisé en ce que**
le dispositif (100) d'accumulation d'énergie électrique comporte un élément de retenue (20) pour retenir le dispositif (100) d'accumulation d'énergie électrique sur le vélo, en particulier sur le composant de vélo (300), l'élément de retenue (20) étant conçu pour retenir le dispositif (100) d'accumulation d'énergie électrique de manière pivotante sur le vélo, en particulier sur le composant de vélo (300).

4. Dispositif (100) d'accumulation d'énergie électrique selon la revendication 3, **caractérisé en ce que**
l'élément de retenue (20) est conçu pour mettre en prise le dispositif (100) d'accumulation d'énergie électrique avec le vélo, en particulier avec le composant de vélo (300).

5. Système (200) d'accumulation d'énergie électrique, en particulier système accumulateur, pour un vélo à entraînement électrique,
qui comporte deux dispositifs (100, 100') d'accumulation d'énergie électrique, en particulier deux accumulateurs, pour un vélo à entraînement électrique,
**caractérisé en ce que**
le système (200) d'accumulation d'énergie électrique comporte respectivement, au titre des deux dispositifs (100, 100') d'accumulation d'énergie électrique, le dispositif (100) d'accumulation d'énergie électrique selon l'une des revendications 1 à 4,
les agencements de verrouillage (30, 30') des deux dispositifs (100, 100') d'accumulation d'énergie électrique s'engageant l'un dans l'autre au moins par zones dans un état agencé l'un contre l'autre.

6. Composant de vélo (300), en particulier tube de cadre (110), pour un vélo à entraînement électrique, **caractérisé en ce que**
le composant de vélo (300) est conçu pour recevoir deux dispositifs (100, 100') d'accumulation d'énergie électrique selon l'une des revendications 1 à 4 ou un système (200) d'accumulation d'énergie électrique selon la revendication 5.

7. Composant de vélo (300) selon la revendication 6, **caractérisé en ce que**
des contacts électriques (112, 112') sont agencés dans le composant de vélo (300), lesquels sont conçus pour être connectés électriquement de manière amovible aux contacts électriques (10, 10') respectifs côté accumulateur d'énergie des deux dispositifs (100, 100') d'accumulation d'énergie électrique pouvant être reçus dans le composant de vélo (300),
les contacts électriques (112, 112') agencés dans le composant de vélo (300) étant agencés sur des zones d'extrémité (102, 104) opposées du composant de vélo (300), en particulier sur une zone d'extrémité (102) proche du pédalier d'un tube de cadre (110) et sur une zone d'extrémité (104) proche du tube de direction du tube de cadre (110).

8. Composant de vélo (300) selon la revendication 6 ou 7,
**caractérisé en ce qu'**un dispositif de verrouillage (120) est agencé sur le composant de vélo (300) pour verrouiller les deux dispositifs (100, 100') d'accumulation d'énergie électrique pouvant être reçus dans le composant de vélo (300).

9. Composant de vélo (300) selon la revendication 8, **caractérisé en ce que**
le dispositif de verrouillage (120) est conçu de manière à coopérer avec les agencements de verrouillage (30, 30') côté accumulateur d'énergie des deux dispositifs (100, 100') d'accumulation d'énergie électrique pouvant être reçus dans le composant de vélo (300), en particulier pour s'engager sélectivement dans au moins un agencement de verrouillage (30, 30') des deux dispositifs (100, 100') d'accumulation d'énergie électrique.

10. Composant de vélo (300) selon la revendication 8 ou 9, **caractérisé en ce que**
le dispositif de verrouillage (120) est agencé de manière coulissante sur le composant de vélo (300) pour verrouiller au moins l'un des deux dispositifs (100, 100') d'accumulation d'énergie électrique pouvant être reçus dans le composant de vélo (300) dans un état de coulissement du dispositif de verrouillage (120) dans le composant de vélo (300).

11. Composant de vélo (300) selon l'une des revendications 8 à 10, **caractérisé en ce que**
le composant de vélo (300) comporte un compartiment de câble (140) destiné à recevoir au moins un câble,
le dispositif de verrouillage (120) étant agencé de manière à traverser au moins en partie le compartiment de câble (140).

12. Composant de vélo (300) selon l'une des revendications 8 à 11, **caractérisé en ce que**
le dispositif de verrouillage (120) comporte un verrou rotatif pour verrouiller de manière rotative les deux dispositifs (100, 100') d'accumulation d'énergie électrique pouvant être reçus dans le composant de vélo (300) et/ou un verrou enfichable pour verrouiller par enfichage les deux dispositifs (100, 100') d'accumulation d'énergie électrique pouvant être reçus dans le composant de vélo (300).

13. Composant de vélo (300) selon l'une des revendications 6 à 12, **caractérisé en ce que**
le composant de vélo (300) comporte un dispositif de commande d'énergie connecté aux contacts électriques (112, 112') agencés dans le composant de vélo (300) pour fournir sélectivement de l'énergie à partir de l'un des dispositifs (100, 100') d'accumulation d'énergie électrique pouvant être reçus dans le composant de vélo (300), ou des deux, sur un vélo à entraînement électrique.

14. Vélo à entraînement électrique comprenant un composant de vélo (300) selon l'une des revendications 6 à 13.
